# EUROPEAN PATENT SPECIFICATION

(11) **EP 0 572 114 B1**
(45) Date of publication and mention of the grant of the patent: **29.07.1998**
(21) Application number: 93303038.9
(22) Date of filing: 20.04.1993
(51) Int. Cl.: G11B 7/085

(54) **An apparatus for driving an objective lens**
Objektivantriebsgerät
Appareil pour l'entraînement d'un objectif

(30) Priority: 22.04.1992 JP 129592/92; 02.10.1992 JP 287137/92; 17.12.1992 JP 354698/92; 09.04.1993 JP 105981/93; 09.04.1993 JP 105982/93; 14.04.1993 JP 109825/93
(43) Date of publication of application: 01.12.1993
(73) Proprietor: CANON KABUSHIKI KAISHA, Ohta-ku Tokyo 146 (JP)
(72) Inventor: Date, Nobuaki, c/o CANON KABUSHIKI KAISHA, Ohta-ku, Tokyo (JP)
(74) Representative: Beresford, Keith Denis Lewis

(56) References cited:
- EP-A- 287 235
- EP-A- 376 699
- FR-A- 2 648 263
- US-A- 5 124 965

## Description

The present invention relates to an apparatus for driving an objective lens, and particularly, to a movable optical head portion of a separation type optical head which is used in a magnetooptical or optical type information recording-reproducing apparatus.

Conventionally, in prior art objective lens driving apparatus, when a light spot is illuminated on a disc-shaped recording medium to optically perform information recording, an actuator of an objective lens is supported along a guide rail and is movable therealong by an appropriate driving force in a seek or tracking direction, so that the objective lens for forming the light spot is tracking-controlled in a radial direction with respect to the recording medium.

In the prior art apparatus, the number of optical system elements on the objective lens actuator side and movable portions of tracking and focusing control systems is lessened and these elements or portions are simplified, as far as possible, in order to make a movable portion of the optical head light in weight and achieve a high-speed operation of the information recording apparatus. Further, a new structure has been proposed in which a galvano-mirror is used with no elements for conducting a fine tracking function being disposed on the movable portion side, as a further approach towards a lightweight movable portion.

In such an information recording-reproducing apparatus wherein the galvano-mirror is used, however, it is still necessary to arrange an actuator for driving the objective lens in a focusing direction and a carriage for moving the objective lens in a seek direction in the objective lens driving apparatus. Thus, an adequately lightweight apparatus has not yet been attained.

It is an aim of the present invention to provide an objective lens driving apparatus in which high-speed access is possible and an adequately lightweight structure is obtained.

According to one aspect of the present invention, there is provided an objective lens driving apparatus for use in an optical apparatus for effecting at least one of the functions of information recording or reproduction by illuminating a disc-shaped recording medium by a light spot, said objective lens driving apparatus comprising: an objective lens having an optical axis, an objective lens holding member for holding said objective lens, a supporting member for movably supporting said objective lens holding member in a radial direction with respect to the recording medium, said supporting member comprising (i) a first pair of parallel leaf springs, one end of each of which is fixed to said apparatus and which extends in a direction perpendicular to a movement direction of said objective lens holding member and away from said objective lens holding member, and (ii) second and third pairs of parallel leaf springs, one end of each pair being fixed to a side portion of said objective lens holding member, and extending in the direction perpendicular to the movement direction and the other end of each pair being connected to said first pair of parallel leaf springs, said first pair of parallel leaf springs being arranged between said second and third pairs of parallel leaf springs, and the direction of primary deformation of each of the first, second and third pairs of parallel leaf springs being substantially the same as the radial direction with respect to the recording medium; characterised in that: said apparatus further comprises: reinforcing plates mounted to said first, second and third pairs of parallel leaf springs for reinforcing said leaf springs.

According to another aspect, the present invention relates to An optical apparatus for effecting at least one of the functions of information recording or reproduction by illuminating a light spot on a disc-shaped recording medium. The apparatus includes an objective lens, an objective lens holding member, a supporting member and a hinge member. Those elements are similar to those discussed above with respect to the objective lens driving apparatus.

These advantages and others will be more readily understood in connection with the following detailed description of the preferred embodiments in conjunction with the drawings.

Fig. 1 is a perspective view showing an objective lens driving apparatus

Fig. 2 is a plan view of the apparatus shown in Fig. 1.

Fig. 3 is a view showing an example of a compound parallel leaf spring to be used in the apparatus shown in Fig. 1, which is formed by a cutout from a plane plate.

Fig. 4 is a perspective view showing a second objective lens driving apparatus

Fig. 5 is a cross-sectional view of the apparatus shown in Fig. 4.

Fig. 6 is a perspective view showing a third objective lens driving apparatus

Fig. 7 is a plan view of the apparatus shown in Fig. 6.

Fig. 8 is a perspective view showing a variation of the third objective lens driving apparatus.

Fig. 9 is a perspective view showing an embodiment of an objective lens driving apparatus according to the present invention.

Figs. 10A-10C, Figs. 11A-11C and Fig. 12 are a cross-sectional views respectively showing an embodiment and modifications thereof of an objective lens driving apparatus according to the present invention.

Fig. 13 is a block diagram of a circuit used in the apparatus shown in Figs. 10A-10C, 11A-11C or 12.

Fig. 14 is a perspective view showing a sixth objective lens driving apparatus

Fig. 15 is a cross-sectional view of the apparatus shown in Fig. 14.

Fig. 16 is a plan view showing the structure of a seventh objective lens driving apparatus.

Fig. 17 is a view. taken in the direction of arrow C shown in Fig. 16, showing a modification of the apparatus shown in Fig. 16.

Fig. 18 is a view, taken in the direction of arrow C shown in Fig. 16, showing another modification of the apparatus shown in Fig. 16.

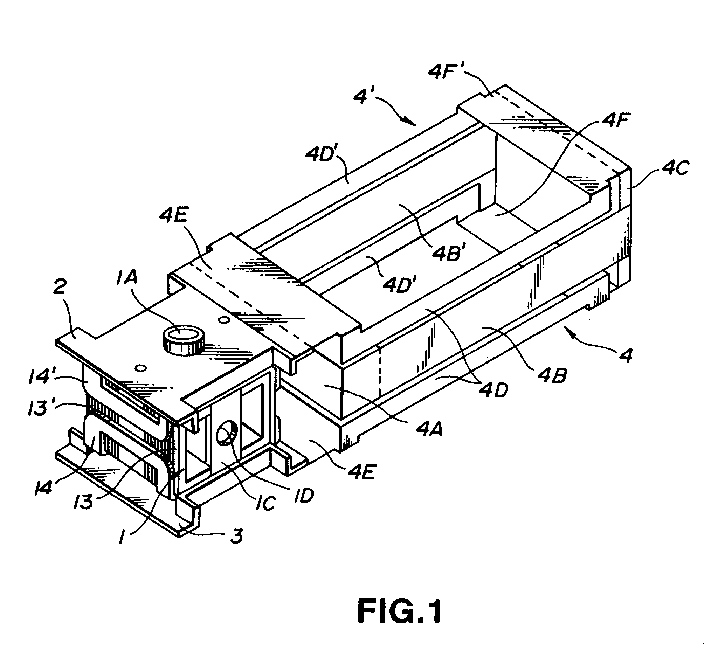

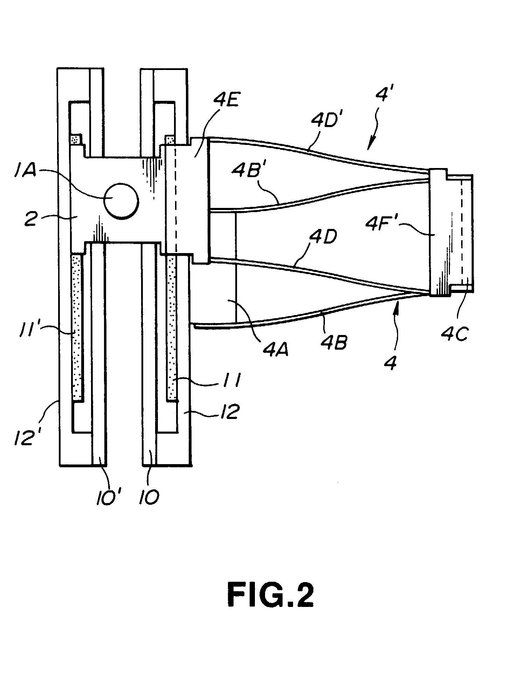

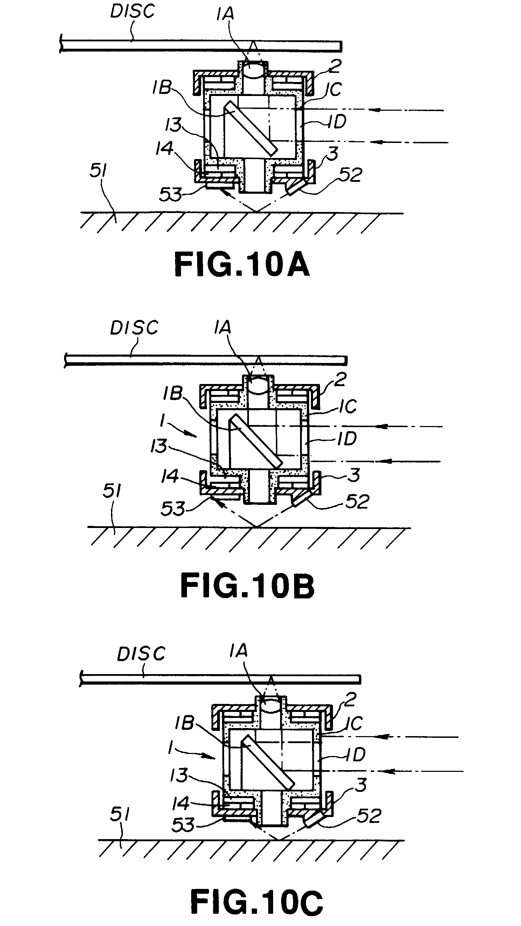

A first example of an objective lens driving apparatus will be explained with reference to Figs. 1 and 2, which are respectively a perspective view and a plan view. (In the perspective view, inner and outer yokes are omitted.) In Figs. 1 and 2, reference numeral 1 designates a tube-shaped objective lens holder or an actuator which includes an objective lens 1A, and a bounce mirror 1B (see Figs. 10A-10C) for directing a laser beam from a fixed optical system (not shown) toward the objective lens 1A and for returning light reflected from a recording medium. The bounce mirror is supported at its end to be rotatable upward.

At right and left sides of the actuator 1, tracking coils 13 and 13' are disposed, and the coils 13 and 13' surround inner yokes 10 and 10 (Fig. 2) which extend parallel to a tracking or seek direction. Focusing coils 14 and 14' are mounted on the side surface of the coils 13 and 13'. Outer yokes 12 and 12' extend opposite and parallel to the inner yokes 10 and 10 and are connected thereto at its opposite ends. Magnets 11 and 11' are mounted on the outer yokes 12 and 12' opposite to the inner yokes 10 and 10'. Thus, a required magnetic circuit is constructed so that magnetic fluxes act perpendicularly on the coils 13 and 13' and the coils 14 and 14'.

Plate members 2 and 3 are mounted to upper and lower surfaces of the actuator 1, and one end of each of the plate members 2 and 3 is respectively supported by compound parallel leaf springs 4 and 4'. The compound parallel leaf springs 4 and 4' respectively include a fixed base member 4A fixed to the back surface of the outer yoke 12, first parallel leaf springs 4B and 4B' one end of each of which being fixed to opposite ends in the tracking direction of the base member 4A and which extends in a direction perpendicular to the tracking direction, a movable frame member 4C to which the other end of each of the parallel leaf springs 4B and 4B' are fixed, and two pairs of upper and lower second parallel leaf springs 4D and 4D' whose base ends are fixed to upper and lower opposite ends of the movable frame member 4C, whose tip ends are connected to the plate members 2 and 3 and which extend parallel to the first parallel leaf springs 4B and 4B'. In this example, the ends of each pair of the parallel leaf springs 4D and 4D' are respectively connected to each other through hinge portions 4E, 4E' and 4F, 4F' that are integrally formed by bending. The hinge portions 4E and 4E' can permit an up and down hinging action due to a small resilient deflection or flexure thereof in a range of clearance between the parallel leaf springs 4B and 4D and 4B' and 4D'.

When a required driving force is caused by the action of direct current flowing in the coils 13 and 13' and the magnetic fluxes of the magnetic circuit and the actuator 1 are moved along the inner yokes 10 and 10', the parallel leaf springs 4B and 4D and 4B and 4D' are deflected or bent while supporting the actuator 1 and permit movement of the actuator 1 in the tracking direction. In this example, when the actuator 1 moves in the tracking direction, the parallel leaf springs 4B and 4D and 4B' and 4D' of the compound parallel leaf springs 4 and 4', respectively, are deflected in a side direction, but the end portions thereof on the side of the movable frame member 4C trace arcuate movement paths, since the base ends of the parallel leaf springs 4B and 4B' are fixed to the stationary base member 4A. On the other hand, the end portions of the parallel leaf springs 4D and 4D' connected to the plate members 2 and 3 trace arcuate movement paths in a direction opposite to the movement path of the end portion on the frame member side. Therefore, their composite movement is corrected by the counteraction between those arcuate movement paths. Thus, the actuator 1 can move along a correct linear path. As a result, there is no concern that an optical axis of a laser beam being emitted will deviate from a center of the objective lens 1A, or that light intensity will be lowered. Thus, stable information reading and writing can be achieved.

In this example, a perpendicular force is also effected by the action of direct current flowing in the coils 14 and l4' and the magnetic fluxes of the magnetic circuit. Therefore, the objective lens 1A is moved up and down in a direction along the optical axis of the objective lens 1A while bending the hinge portions 4E, 4E' and 4F, 4F'. Hence, accurate focusing control is attained.

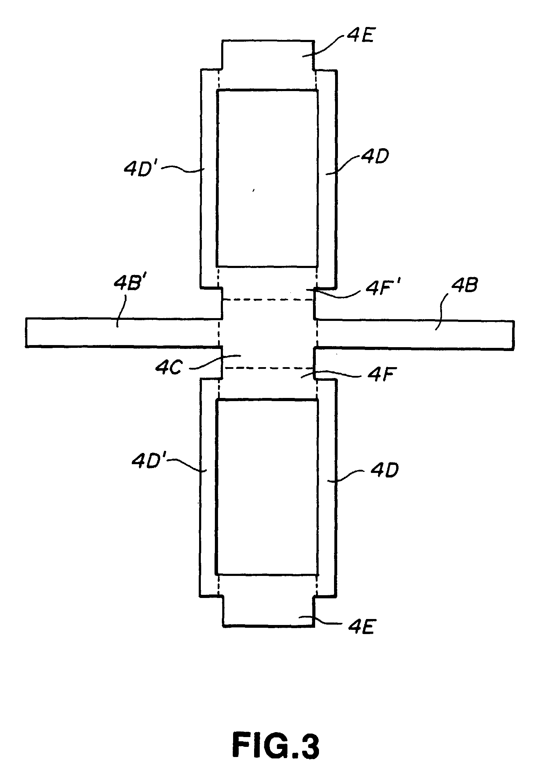

In this example, the parallel leaf springs 4B, 4B' and 4D, 4D' the movable frame member 4C and the hinge portions 4E, 4E' and 4F, 4F' of the compound parallel leaf springs 4 and 4' may be integrally formed by cutting (e.g., press-punching) and bending a single spring plate member, as shown in Fig. 3.

Further, in this example, the actuator 1 is provided with at least one wall member 1C (in this example, located at an opposite central opening portion of the actuator 1) in order to establish a light path at its central portion and to obtain an adequate strength, irrespective of the existence of the inner yoke 10 of the magnetic circuit extending through the actuator 1, so that sub-resonance is prevented. Wall member 1C is representative of wall member 1C' that can be provided on the opposite side of actuator 1. Due to the wall member 1C or 1C', deformation of the actuator 1 can be prevented or reduced even if an up and down motion is imparted to the actuator 1 at the time of focusing control. In the wall member 1C or 1C', a window 1D or 1D' (not shown) is formed for guiding the laser light from outside (the stationary or fixed optical system) to the movable optical system.

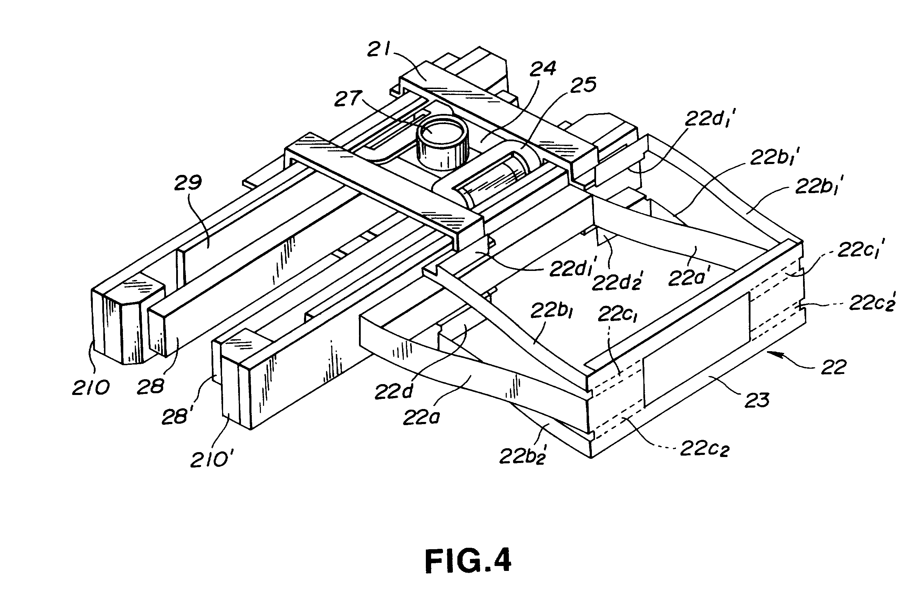

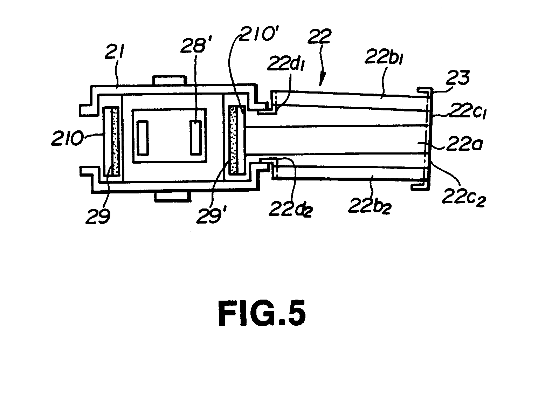

A second example of an objective lens driving apparatus will be explained with reference to Figs. 4 and 5, which are respectively a perspective view and a cross-sectional view. In the second example, a compound parallel leaf spring 22 for supporting an actuator 21 has such a structure that is resistive to torsion. The compound parallel leaf spring 22 includes three pairs of parallel leaf springs 22a and 22a', 22b₁ and 22b₂, and 22b₁' and 22b₂' each of which extend in a direction perpendicular to the tracking direction. One pair of parallel leaf springs 22a and 22a' are fixed to an outer yoke 210' at one end thereof, and connected, at their other end, to one end of the other two pairs of parallel leaf springs 22b₁ and 22b₂, and 22b₁' and 22b₂' through a base member 23. The other ends of the other two pairs of parallel leaf springs 22b₁ and 22b₂, and 22b₁' and 22b₂' are mounted to the actuator 21. Further, at locations whereat the parallel leaf springs 22b₁ and 22b₂, and 22b₁' and 22b₂' are mounted to the base member 23 and to the actuator 21, hinge planes 22c₁, 22c₂ and 22c₁' and 22c₂' and 22d₁ and 22d₂ and 22d₁' and 22d₂' are arranged, which are deformed when the objective lens 27 is controlled in the focusing direction, in a plane that is parallel to the optical axis of a laser light beam emitted from the objective lens 27 and parallel to a radial direction with respect to the disc-shaped optical information recording medium (i.e., a direction parallel to a direction of extension inner yokes 28 and 28' and outer yokes 210' and 210. In Figs. 4 and 5, reference numerals 29 and 29' designate magnets which are respectively mounted to the inner surfaces of the outer yokes 210 and 210', and reference numerals 24 and 25 respectively designate tracking and focusing coils.

In the second example, when current is caused to flow in the focusing coil 25 to move the actuator 21 up and down and the actuator 21 is otherwise about to cause a pitching operation, such a pitching operation is suppressed by deflection of the hinge planes, discussed above, due to the structure of the compound parallel leaf spring 22 of a cantilever type. Thus, proper alignment of the optical axis of the objective lens 27 is assured.

The other structure, function and operation of the second example are substantially the same as those of the first example.

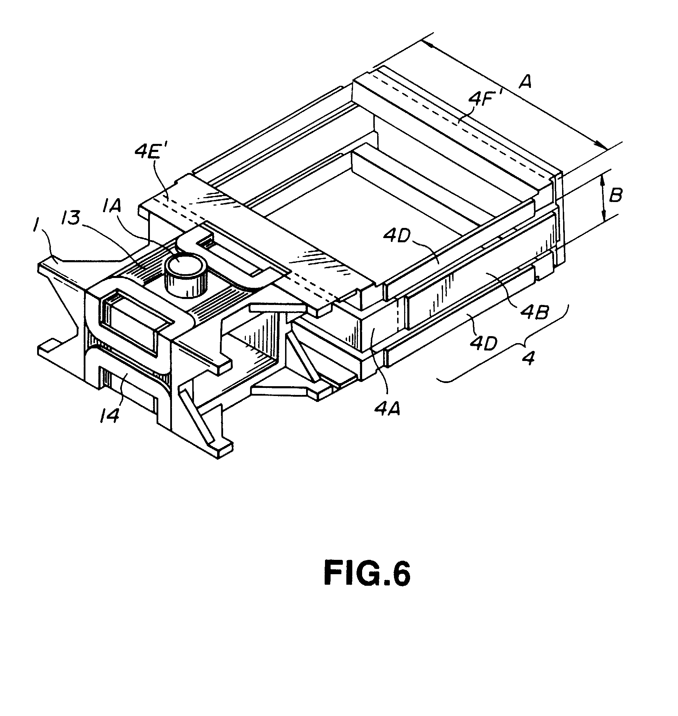

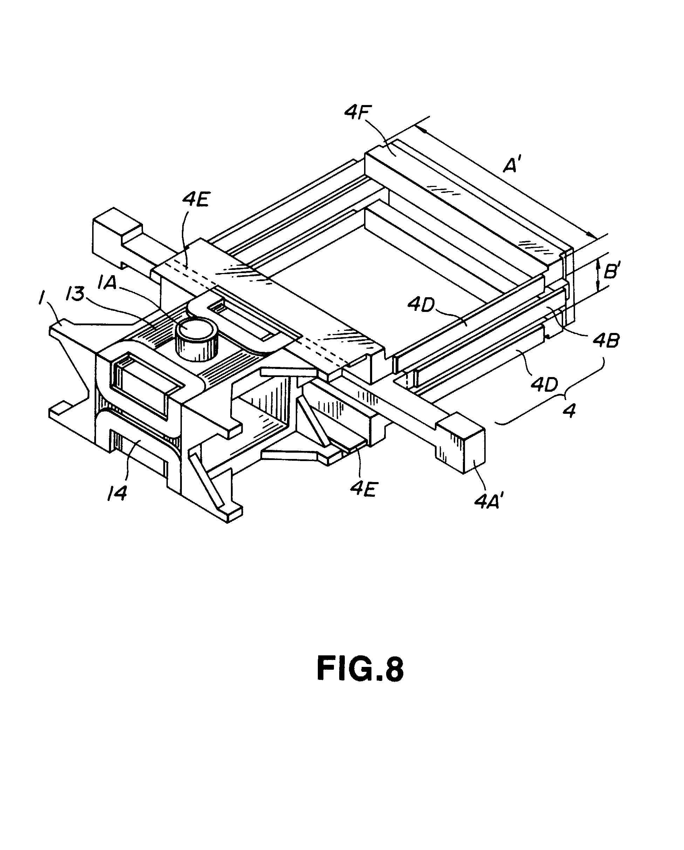

A third example of the present invention will be described with reference to Figs. 6, 7 and 8 (In Figs. 6 and 8, inner and outer yokes 10 and 12 are omitted). As shown in Fig. 6, the vibration of an objective lens driving apparatus in the pitching direction occurs less as width A becomes larger and depth B becomes smaller.

Therefore, in the third example, as shown in Fig. 8, depth B' (depth of parallel leaf spring 4B in a plane that is parallel to the optical axis of the objective lens 1A and perpendicular to the tracking direction) is made as small as possible, so that vibration of the illustrated objective lens driving apparatus in the pitching direction is essentially eliminated. In this case, the depth B' is preferably made approximately one to one and a half times as large as the width of parallel leaf springs 4D and 4D' that are disposed above and beneath the leaf springs 4B. Further, the thickness of the parallel leaf spring 4B in a plane, which is perpendicular to the optical axis of the objective lens 1A, needs to be larger than the thickness, in the same plane, of the parallel leaf springs 4D and 4D' that are located above and beneath the leaf springs 4B.

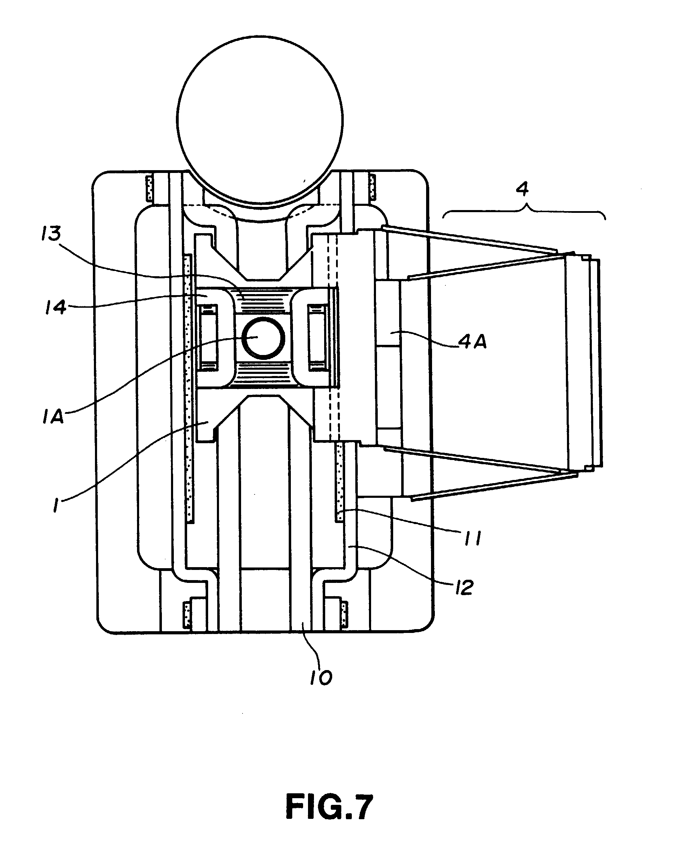

In Figs. 6, 7 and 8, the shapes or configurations of the actuator 1, inner and outer yokes 10 and 12, base member 4A, hinge portions 4E and 4F, etc., are a little different from those shown in Figs. 1 and 2. Fig. 7 shows in phantom lines a spindle motor for a disc-shaped optical information recording medium.

In the third example, portions or members having the same functions as those in Figs. 1 and 2 are designated by the same reference numerals.

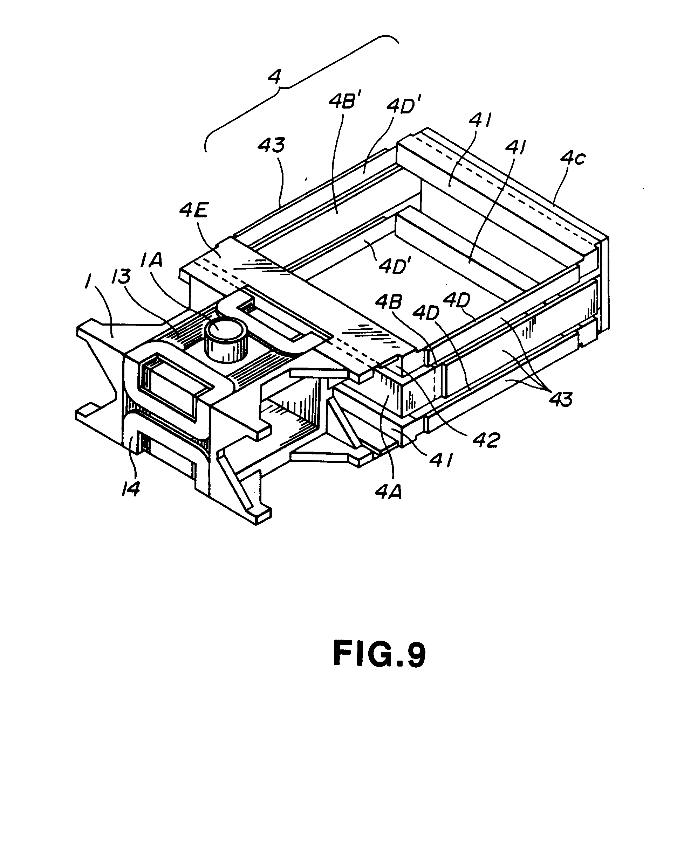

An embodiment of the present invention will be described with reference to Fig. 9. In the embodiment, reinforcing plates 41, 42 and 43 are respectively provided on the back surfaces of bent portions of the compound parallel leaf spring 4, portions that connect between the parallel leaf springs 4D and 4D' and the hinge portions 4E and 4E' on the actuator side, and outer surfaces of the parallel leaf springs 4B, 4B' and 4D, 4D'. The rolling and pitching of the illustrated objective lens driving apparatus can be prevented by those reinforcing plates 41, 42 and 43.

In particular, the reinforcing plates 41, 42 and 43 respectively prevent the rolling, torsion and pitching of the illustrated objective lens driving apparatus. These reinforcing plates 41, 42 and 43 may be made of a material that has vibration absorbing characteristics.

In the embodiment, portions or members having the same functions as those in Fig. 6 are designated by the same reference numerals.

As discussed above, the rotatable or bounce mirror 1B is also moved in the focusing direction when the focusing control is performed. As a result, when a reflection light beam from a disc is reflected by the bounce mirror 1B to enter a servo sensor in a stationary optical system (not shown), a center of the reflection light beam can deviate upward or downward and an offset in the tracking direction can occur.

Therefore, it is necessary to detect such offset and conduct a correction such as by controlling an incidence angle of the laser light. Means for performing such a detection, however, should preferably have a structure that is light in weight and simple as far as possible. An embodiment of the invention and its modifications including detecting means is shown in Figs. 10A-10C, Figs. 11A-11C and Fig. 12.

In the embodiment shown in Figs. 10A-10C, the detecting means includes a reflector plate 51 which is disposed under an actuator 1 of an objective lens 1A and extends in the tracking direction, a light emitting element 52 which is disposed under the actuator 1, opposite to the reflector plate 51, and a light receiving element 53 which is also positioned under the actuator 1. The light receiving element 53 receives light from the light emitting element 52 reflected by the reflector plate 51. The distance between the actuator 1 and the reflector plate 51 is detected based on a change in the amount of received light, as shown in Figs. 10A-10C.

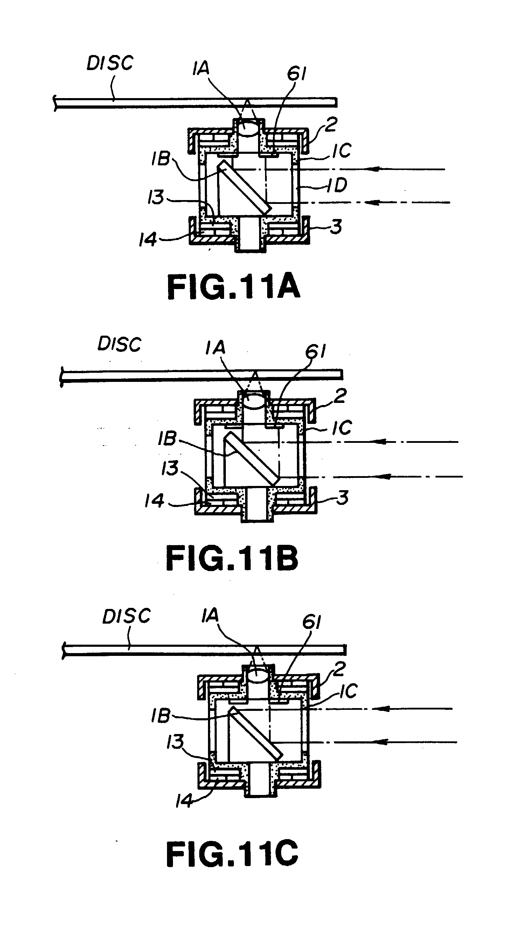

In the embodiment shown in Figs. 11A-11C, the detecting means includes a divided sensor 61 which has an annular shape as a whole so that the sensor 61 can surround a light path directed from a bounce mirror 1B to an objective lens 1A in an actuator 1. When laser light is reflected by the bounce mirror 1B toward the objective lens 1A, a difference in amounts of light received by respective receiving portions of the divided sensor 61 occurs if a center of the light beam deviates. Thereby, the positional deviation of the light beam can be detected.

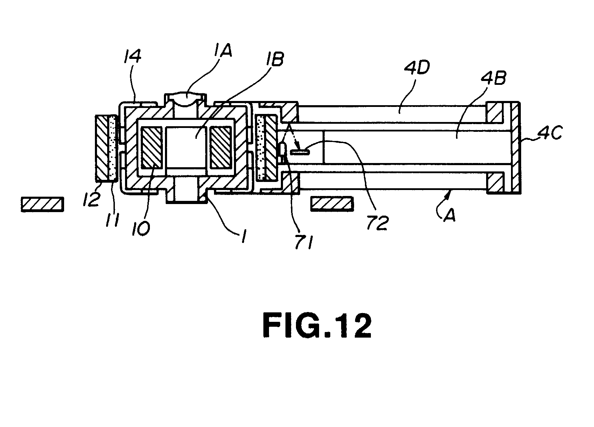

In the embodiment shown in Fig. 12, the detecting means is disposed in a compound parallel leaf spring 4, and includes a light emitting element 71 and a light receiving element 72 which are located in the vicinity of fixed ends of parallel leaf springs 4B. In this case, the light emitting element 71 applies a light beam onto a neighborhood of a portion of a parallel leaf spring 4D mounted to the actuator 1, and reflected light is received by the light receiving element 72. Thus, the position of the actuator 1 in the focusing direction is detected by utilizing a change in the amount of received light.

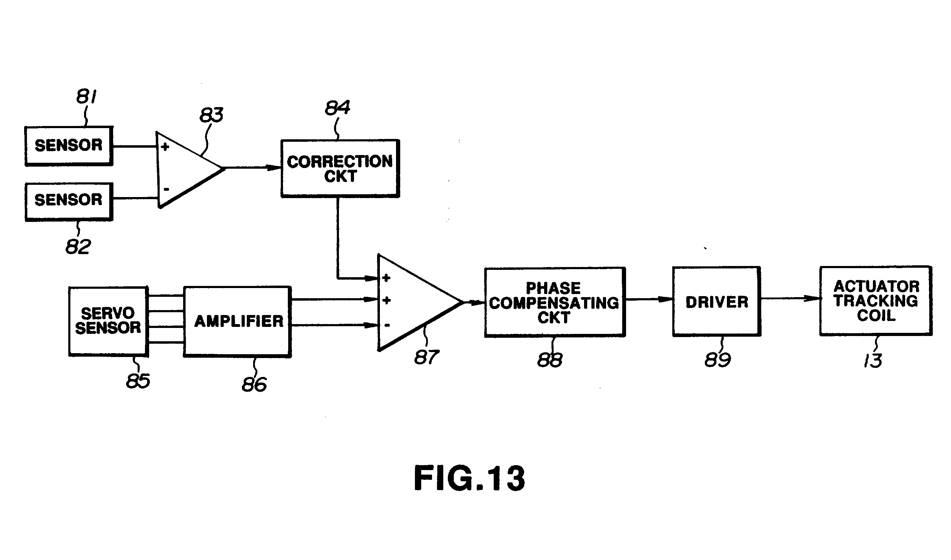

Fig. 13 shows a schematic structure of a circuit by which, when the focusing operation of the actuator 1 is detected by the detecting means, a correction of tracking offset is performed by using the detection output. In the circuit, two divided areas of the light receiving element 53 shown in Figs. 10A-10C, the light receiving element 61 shown in Figs. 11A-11C and the light receiving element in Fig. 12 are designated as sensors 81 and 82. When the actuator 1 is moved upward in the focusing direction, the output of the sensor 81 increases. When the actuator 1 is moved downward in the focusing direction, the output of the sensor 82 increases.

In the circuit, an amplifier 83 conducts an output difference between the outputs of sensors 81 and 82 that changes according to the focusing position, a correction circuit 84 multiplies an output of the amplifier 83 by a predetermined coefficient, and an output of the correction circuit 84 is input into an amplifier 87. Outputs of four divided portions of a servo sensor 85 disposed in the stationary optical system (not shown) are input into the amplifier 87 through an amplifier 86, and an operation of the four outputs and the output from the correction circuit 84 is performed. Its result is input into a phase compensating circuit 88. A driver 89 is operated on the basis of an output signal of the phase compensating circuit 88 whose phase is compensated for, and then current is caused to flow in a tracking coil 13 of the actuator 1. Thus, the tracking servo is actuated.

In the embodiments shown in Figs. 10A-10C, llA-llC and 12, portions or members having the same functions as those in Fig. 1 are designated by the same reference numerals.

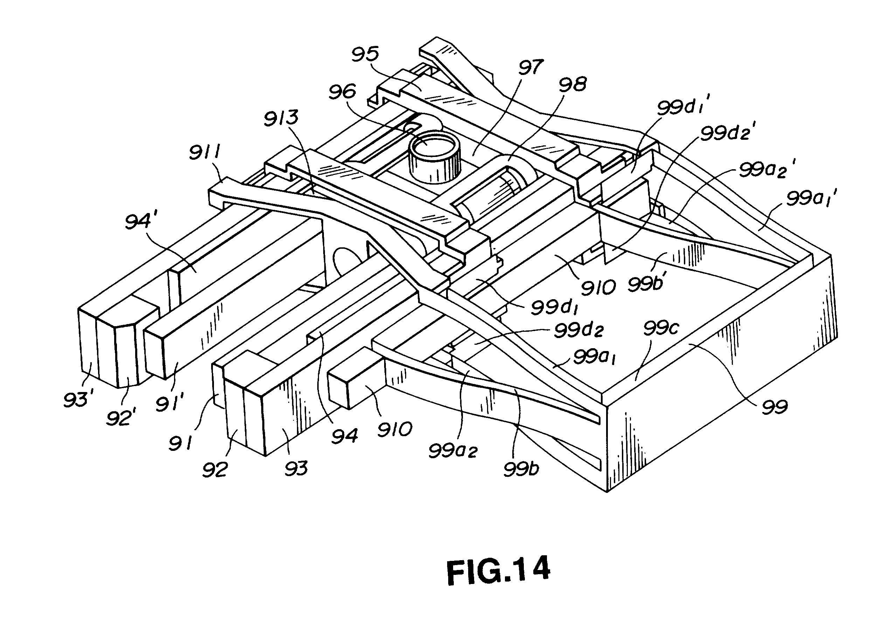

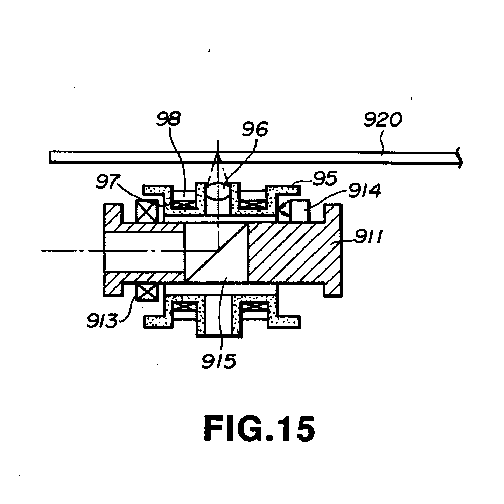

A further example of an objective lens driving apparatus will be explained with reference to Figs. 14 and 15, which are respectively a perspective view and a cross-sectional view.

In this example, a bounce mirror 915 (Fig. 15) and an actuator 95 are separately supported by compound parallel leaf springs, so that the bounce mirror 915 does not move in the focusing direction even when the focusing control of the actuator 95 is conducted.

In Fig. 14, reference numerals 91 and 91' designate inner yokes of a magnetic circuit, reference numerals 92 and 92' designates intermediate yokes, and reference numerals 94 and 94' designate permanent magnets. The magnets 94 and 94' are used for focusing, tracking and access operations. Further, reference numeral 96 designates an objective lens to be driven by the actuator 95, reference numeral 97 designates a tracking coil, and reference numeral 98 designates a focusing coil, which is integrally formed on the actuator 95. Reference numeral 99 designates a compound parallel leaf spring. This spring 99 comprises three pairs of parallel leaf springs 99a₁, 99a₂, 99a₁', 99a₂' and 99b, 99b' extending in a direction perpendicular to the tracking direction. One pair of parallel springs 99b and 99b' are fixed to the outer yoke 93 at one end thereof, and the other ends thereof are connected to one end of each of the other two pairs of parallel leaf springs 99a₁, 99a₂ and 99a₁', 99a₂'. The other ends of the other two pairs of the leaf springs are mounted to the actuator 95 through hinge portions 99d₁, 99d₂ and 99d₁', 99d₂'. Further, in a connecting portion of the pairs of parallel leaf springs, a connecting plate 99c for connecting those parallel springs is formed. The hinge portion is provided in the connecting plate 99c. In Fig. 14, the hinge portion is not shown.

Each of the pairs of the parallel leaf springs of compound parallel leaf spring 99 is bent in the tracking direction to access an optical recording medium such as an optical disc 920 in its radial direction, and hinge portions of the connecting plate 99c and hinge portions 99d₁₋₄ are deflected at the time of focusing to permit an up and down movement of the actuator 95. Reference numeral 910 designates a base seat for the compound parallel leaf springs, and the base seat 910 is fixed to the outer yoke 93.

Reference numeral 911 designates a carriage, which is mounted to another compound parallel leaf spring that has the same structure as the compound parallel leaf spring 99 discussed above in such a manner that the carriage 911 is maintained in a disengaged state from the actuator 95. As shown in Fig. 15, the carriage 911 carries a tracking coil 913, and is furnished with a photosensor 914 and the bounce mirror 915, which are integrally mounted.

The operation of this objective lens driving apparatus will be described. As shown in Fig. 15, when the focusing, tracking or access operation of tile objective lens 96 is conducted, seeking the rotation of the optical disc 920, a servo circuit (not shown) is actuated. Thus, current flows in the focusing coil 98 and tracking coil 97 of the actuator 95 to generate upward and downward or forward and rearward forces by the magnetic circuit, and the track on the optical disc 920 is accessed. At this time, the photosensor 914 mounted on the carriage 911 detects an interval between the photosensor 914 and the actuator 95 in the tracking direction, and a current is caused to flow in the tracking coil 913 so that the interval between the carriage 911 and the actuator 95 remains unchanged, i.e., so that the relative position between the objective lens 96 and the bounce mirror 915 is kept unchanged.

In this case, since the bounce mirror 915 is not interlocked with the focusing action of the objective lens 96, there is no concern that an offset of returned laser light occurs on the servo sensor. Further, when pitching of the actuator 95 occurs, there is no concern of that alignment of the optical axis of the mirror 915 will not be maintained, even when alignment of the optical axis of the actuator 95 is not maintained.

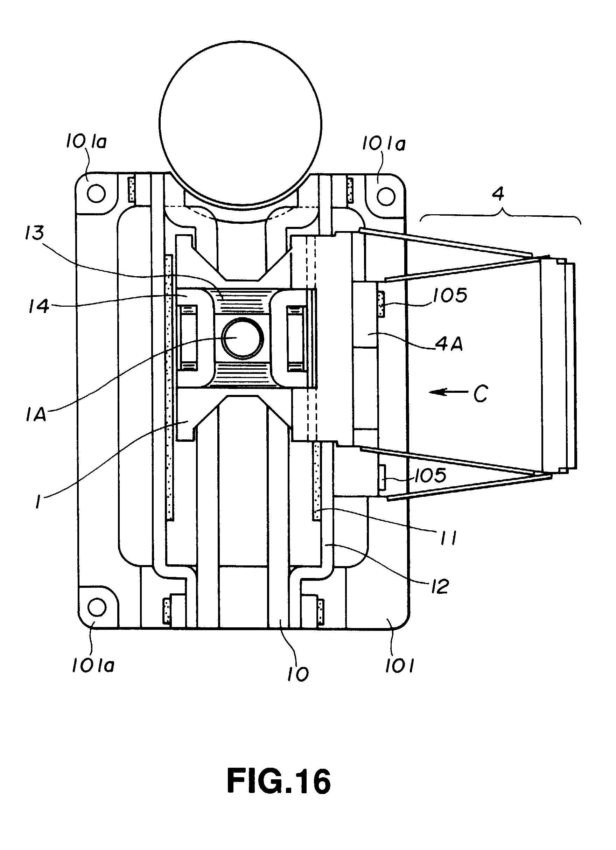

A seventh example of an objective lens driving apparatus will be explained with reference to Figs. 16, 17 and 18.

As discussed above, since the actuator 1 is supported by a compound parallel leaf spring, it is more difficult to adjust the optical axis of the objective lens 1A, than in a prior art apparatus wherein an objective lens is supported by a rigid guide.

In the seventh example, a simple adjusting method of the optical axis of an objective lens 1A is adopted in the objective lens driving apparatus.

In Fig. 16, reference numeral 101 designates a support base of the objective lens driving apparatus, and outer yoke 12, inner yoke 10, permanent magnet 11, actuator 1 and compound parallel leaf spring 4 are integrally mounted on the support base 101. Reference numerals 101a designate base seats for mounting the support base 101 to the body of an information recording-reproducing apparatus (not shown). The support base 101 is mounted to the body at the base seats 101a by screws, for example, through a spring q member. The height of the support base 101 is adjustable by using the screws and the spring member. Three base seats 101a are arranged at three corners of the oblong support base 101.

In such a structure, when the optical axis of the objective lens 1A is to be adjusted relative to an optical disc, tightness of the screws at the three base seats 101a is adjusted to change the posture of the support base 101 relative to the disc surface.

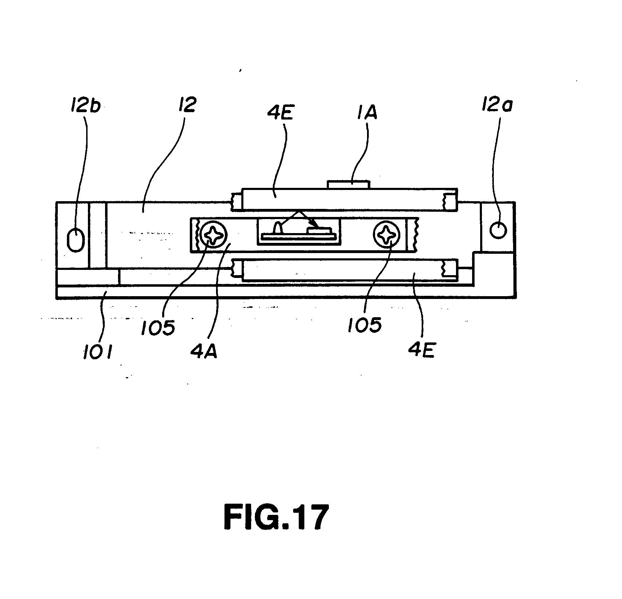

Fig. 17 shows a modification.

In this modification, an outer yoke 12 is fixed to an inner yoke 10 by screws, and one of two screw holes 12a and 12b formed in the inner yoke 10 is shaped into. an oblong hole 12b which extends in a direction parallel to the optical axis direction of an objective lens 1A.

In the modification, since the actuator 1 for holding the objective lens 1A is fixed to the outer yoke 12 by screws 105 through the compound parallel leaf spring, the posture of the outer yoke 12 relative to the inner yoke 10 is adjusted in a range of the size of the oblong hole 12b to adjust the optical axis of the objective lens 1A relative to the disc.

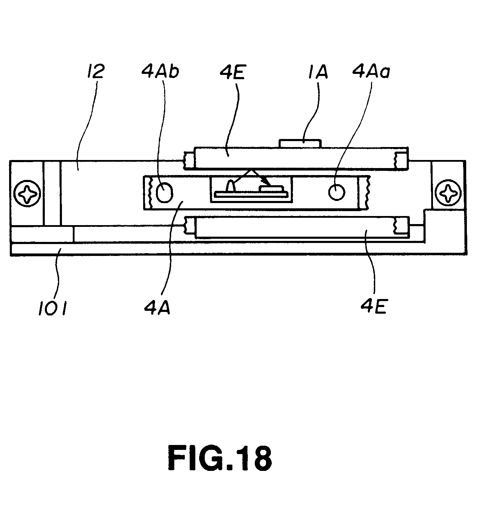

Fig. 18 shows another modification.

In the modification, a base member 4A of a compound parallel leaf spring 4 is fixed to an outer yoke 12 by screws, and one of two screw holes 4Aₐ and 4A_{b} formed in the outer yoke 12 is shaped into an oblong hole 4A_{b} which extends in a direction parallel to the optical axis direction of an objective lens 1A.

The posture of the compound parallel leaf spring 4 relative to the outer yoke 12 is adjusted in a range of. the size of the oblong hole 4A_{b} to adjust the optical axis of the objective lens 1A relative to the disc.

The adjustment of the optical axis may be conducted by any combination of the seventh example and its modifications. In this case, it is preferable to use the posture adjustment of the support base 101 as a coarse adjustment and use the posture adjustment shown in Fig. 17 or 18 as a fine adjustment. In the seventh example and its modifications, members or portions having the same functions as those shown in Figs. 6, 7 and 8 are designated by the same reference numerals.

Except as otherwise disclosed herein, the various components shown in outline or block form in the Figures are individually well known in the information recording-reproducing arts, and their internal construction and operation are not critical either to the making or using of this invention or to a description of the best mode of the invention.

## Claims

1. An objective lens driving apparatus for use in an optical apparatus for effecting at least one of the functions of information recording or reproduction by illuminating a disc-shaped recording medium by a light spot, said objective lens driving apparatus comprising:
an objective lens (1A) having an optical axis;
an objective lens holding member (1) for holding said objective lens;
a supporting member for movably supporting said objective lens holding member in a radial direction with respect to the recording medium, said supporting member comprising (i) a first pair of parallel leaf springs (4B, 4B'), one end of each of which is fixed to said apparatus and which extends in a direction perpendicular to a movement direction of said objective lens holding member and away from said objective lens holding member, and (ii) second and third pairs of parallel leaf springs (4D, 4D'), one end of each pair being fixed to a side portion of said objective lens holding member, and extending in the direction perpendicular to the movement direction and the other end of each pair being connected to said first pair of parallel leaf springs, said first pair of parallel leaf springs (4B, 4B') being arranged between said second and third pairs of parallel leaf springs, and the direction of primary deformation of each of the first, second and third pairs of parallel leaf springs being substantially the same as the radial direction with respect to the recording medium; characterised in that: said apparatus further comprises:
reinforcing plates (43) mounted on said first, second and third pairs of parallel leaf springs for reinforcing said leaf springs.

2. An objective lens driving apparatus as claimed in claim 1, further comprising a hinge member (4E, 4F) for rendering said objective lens holding member movable along the optical axis of said objective lens, said hinge member being formed in a portion of said supporting member.

3. An objective lens driving apparatus according to claim 1, wherein said first, second and third pairs of leaf springs (4B, 4B', 4D, 4D') are integrally formed as a plate.

4. An objective lens driving apparatus according to claims 1, 2 or 3, wherein the width of said first pair of parallel leaf springs (4B, 4B') in a plane parallel to the optical axis of said objective lens (1A) is in a range between one and one and a half times the width of said second or third pairs of parallel leaf springs in that plane.

5. An objective lens driving apparatus according to claim 4, wherein the thickness of said first pair of parallel leaf springs (4B, 4B') in a plane perpendicular to the optical axis of said objective lens (1A) is greater than the thickness of said second and third pairs of parallel leaf springs (4D, 4D') in that plane.

6. An objective lens driving apparatus according to any preceding claim, further comprising detecting means for detecting the position of said objective lens holding member (1) in a direction along the optical axis of said objective lens (1A).

7. An objective lens driving apparatus according to any preceding claim, further comprising a bounce mirror (1B) for directing a light beam from a light source to said objective lens (1A), a bounce mirror holding member for holding said bounce mirror and a bounce mirror holding member supporting member for movably supporting said bounce mirror holding member in a radial direction with respect to the recording medium, wherein said bounce mirror holding member supporting member comprises a first leaf spring, one end of which is fixed to said apparatus and which extends in a direction perpendicular to a movement direction of said bounce mirror lens holding member and away from said bounce mirror holding member, and a second leaf spring, one end of which is fixed to a side portion of said bounce mirror holding member, which extends in the direction perpendicular to the movement direction and the other end of which is connected to said first leaf spring.

8. An objective lens driving apparatus according to claim 7, further comprising detecting means (914) for detecting a relative position between said objective lens holding member (1) and said bounce mirror holding member.

9. An optical apparatus for effecting at least one of the functions of information recording or reproduction by illuminating a disc-shaped recording medium by a light spot, said apparatus comprising:
an objective lens (1A) having an optical axis;
an objective lens holding member (1) for holding said objective lens;
a supporting member for movably supporting said objective lens holding member in a radial direction with respect to the recording medium, said supporting member comprising (i) a first pair of parallel leaf springs (4B, 4B'), one end of each of which is fixed to said apparatus and which extends in a direction perpendicular to a movement direction of said objective lens holding member (1) and away from said objective lens holding member, and (ii) second and third pairs of parallel leaf springs (4D, 4D'), one end of each pair being fixed to a side portion of said objective lens holding member, and extending in the direction perpendicular to the movement direction and the other end of each pair being connected to said first pair of parallel leaf springs, said first pair of parallel leaf springs being arranged between said second and third pairs of parallel leaf springs (4B, 4B'), and the direction of primary deformation of each of the first, second and third pairs of parallel leaf springs being substantially the same as the radial direction with respect to the recording medium; characterised in that said apparatus further comprises:
reinforcing plates (43) mounted on said first, second and third pair of parallel leaf springs for reinforcing said leaf springs.

10. An optical apparatus according to claim 9, further comprising a hinge member (4E, 4F) for rendering said objective lens holding member movable along the optical axis of said objective lens said hinge being formed in a portion of said supporting member.

11. An optical apparatus according to claim 9, wherein said first, second and third pairs of leaf springs (4B, 4B', 4D, 4D') are integrally formed as a plate cutout.

12. An optical apparatus according to claim 9, wherein the width of said first pair of parallel springs (4B, 4B') in a plane parallel to the optical axis of said objective lens (1A) is in a range between one and one and a half times the width of said second or third pairs of parallel leaf springs (4D, 4D') in that plane.

13. An optical apparatus according to claim 12, wherein the thickness of said first pair of parallel leaf springs (4B, 4B') in a plane perpendicular to the optical axis of said objective lens (1A) is greater than the thickness of said second or third pairs of parallel leaf springs (4D, 4D') in that plane.

14. An optical apparatus according to any one of claims 9 to 13, further comprising detecting means for detecting the position of said objective lens holding member (1) in a direction along the optical axis of said objective lens (1A).

15. An optical apparatus according to any one of claims 9 to 14, further comprising a bounce mirror (1B) for directing a light beam from a light source to said objective lens (1A), a bounce mirror holding member for holding said bound mirror and a bounce mirror holding member supporting member for movably supporting said bounce mirror holding member in a radial direction with respect to the recording medium, wherein said bounce mirror holding member supporting member comprises a first leaf spring, one end of which is fixed to said apparatus and which extends in a direction perpendicular to a movement direction of said bounce mirror lens holding member and away from said bounce mirror holding member, and a second leaf spring, one end of which is fixed to a side portion of said bounce mirror holding member, which extends in the direction perpendicular to the movement direction and the other end of which is connected to said first leaf spring.

16. An optical apparatus according to claim 15, further comprising detecting means (914) for detecting a relative position between said objective lens holding member (1) and said bounce mirror holding member.

## Patentansprüche

1. Ein Objektivantriebsgerät zur Verwendung in einem optischen Gerät zur Bewirkung von mindestens einer der Funktionen einer Informationsaufzeichnung oder -wiedergabe vorgesehen durch Bestrahlung eines scheibenförmigen Aufzeichnungsmediums durch einen Lichtpunkt, wobei das Objektivantriebsgerät folgendes aufweist:
eine Objektivlinse (1A), die eine optische Achse hat,
ein Objektivlinsenhaltebauteil (1) zum Halten der Objektivlinse,
ein Abstützbauteil zum beweglichen Abstützen des Objektivlinsenhaltebauteils in einer Radialrichtung in Bezug zum Aufzeichnungsmedium, wobei das Abstützbauteil (i) ein erstes Paar paralleler Blattfedern (4B, 4B')aufweist, von denen ein Ende an dem Gerät befestigt ist und das sich in eine Richtung senkrecht zu einer Bewegungsrichtung des Objektivlinsenhaltebauteils und weg von dem Objektivlinsenhaltebauteil erstreckt, und (ii) zweite und dritte Paare paralleler Blattfedern (4D, 4D'), von denen jedes Paar an einem Seitenabschnitt des Objektivlinsenhaltebauteils befestigt ist und sich in der Richtung senkrecht zur Bewegungsrichtung erstreckt, und wobei das andere Ende von jedem Paar mit dem ersten Paar paralleler Blattfedern (4B, 4B') verbunden ist, wobei das erste Paar paralleler Blattfedern (4B, 4B') zwischen den zweiten und dritten Paaren paralleler Blattfedern angeordnet ist und die Richtung der Primärdeformation eines jeden des ersten, zweiten und dritten Paars paralleler Blattfedern im wesentlichen dieselbe ist, wie die Radialrichtung in Bezug zum Aufzeichnungsmedium; dadurch gekennzeichnet, daß das Gerät desweiteren aufweist:
Verstärkungsplatten (43), die an den ersten, zweiten und dritten Paaren paralleler Blattfedern zur Verstärkung der Blattfedern befestigt sind.

2. Ein Objektivlinsenantriebsgerät gemäß Anspruch 1, desweiteren aufweisend ein Gelenkbauteil (4E, 4F), um das Objektivlinsenhaltebauteil beweglich entlang der optischen Achse der Objektivlinse zu machen, wobei das Gelenkbauteil in einem Abschnitt des Abstützbauteils ausgebildet ist.

3. Ein Objektivlinsenantriebsgerät gemäß Anspruch 1, wobei die ersten, zweiten und dritten Paare an Blattfedern (4B, 4B', 4D, 4D') integral als eine Platte ausgebildet sind.

4. Ein Objektivlinsenantriebsgerät gemäß den Ansprüchen 1, 2 oder 3, wobei die Breite des ersten Paars paralleler Blattfedern (4B, 4B') in einer Ebene parallel zur optischen Achse der Objektivlinse (1A) in einem Bereich zwischen eins und eineinhalb mal der Breite der zweiten oder dritten Paare an parallelen Blattfedern in jener Ebene liegt.

5. Ein Objektivlinsenantriebsgerät gemäß Anspruch 4, wobei die Dicke des ersten Paars paralleler Blattfedern (4B, 4B') in einer Ebene senkrecht zur optischen Achse der Objektivlinse (1A) größer als die Dicke der zweiten und dritten Paare an parallelen Blattfedern (4D, 4D') in jener Ebene ist.

6. Ein Objektivlinsenantriebsgerät gemäß irgendeinem der vorhergehenden Ansprüche, desweiteren aufweisend eine Erfassungsvorrichtung zur Erfassung der Position des Objektivlinsenhaltebauteils (1) in einer Richtung entlang der optischen Achse der Objektivlinse (1A).

7. Ein Objektivlinsenantriebsgerät gemäß einem der vorhergehenden Ansprüche, desweiteren aufweisend einen Rückprallspiegel (1B) zur Lenkung eines Lichtstrahls von einer Lichtquelle zu einer Objektivlinse (1A), ein Rückprallspiegelhaltebauteil zum Halten des Rückprallspiegels und ein Rückprallspiegelhaltebauteilabstützbauteil zum beweglichen Abstützen des Rückprallspiegelhaltebauteils in einer Radialrichtung in Bezug zum Aufzeichnungsmedium, wobei das Rückprallspiegelhaltebauteilabstützbauteil eine erste Blattfeder aufweist, von der ein Ende an dem Gerät befestigt ist, und die sich in einer Richtung senkrecht zur Bewegungsrichtung des Rückprallspiegellinsenhaltebauteils und weg von dem Rückprallspiegelhaltebauteil erstreckt und eine zweite Blattfeder, von der ein Ende an einem Seitenabschnitt des Rückprallspiegelhaltebauteils befestigt ist, die sich in der Richtung senkrecht zur Bewegungsrichtung erstreckt und wobei das andere Ende davon mit der ersten Blattfeder verbunden ist.

8. Ein Objektivlinsenantriebsgerät gemäß Anspruch 7, desweiteren aufweisend eine Erfassungsvorrichtung (914) zur Erfassung einer Relativposition zwischen dem Objektivlinsenhaltebauteil (1) und dem Rückprallspiegelhaltebauteil.

9. Ein optisches Gerät zur Bewirkung von mindestens einer der Funktionen einer Informationsaufzeichnung oder -wiedergabe durch Bestrahlung eines scheibenförmigen Aufzeichnungsmediums durch einen Lichtpunkt, wobei das Gerät folgendes aufweist:
eine Objektivlinse (1A), die eine optische Achse hat;
ein Objektivlinsenhaltebauteil (1) zum Halten der Objektivlinse;
ein Abstützbauteil zum beweglichen Abstützen des Objektivlinsenhaltebauteils in einer Radialrichtung in Bezug zum Aufzeichnungsmedium, wobei das Abstützbauteil (i) ein erstes Paar paralleler Blattfedern aufweist, von denen ein Ende an dem Gerät befestigt ist und sich in eine Richtung senkrecht zu einer Bewegungsrichtung des Objektivlinsenhaltebauteils (1) und weg von dem Objektivlinsenhaltebauteil erstreckt, und (ii) zweite und dritte Paare paralleler Blattfedern (4D, 4D'), von denen jedes Paar an einem Seitenabschnitt des Objektivlinsenhaltebauteils befestigt ist und sich in der Richtung senkrecht zur Bewegungsrichtung erstreckt, und wobei das andere Ende von jedem Paar mit dem ersten Paar paralleler Blattfedern verbunden ist, wobei das erste Paar paralleler Blattfedern zwischen den zweiten und dritten Paaren paralleler Blattfedern (4B, 4B') angeordnet ist und die Richtung der Primärdeformation eines jeden des ersten, zweiten und dritten Paare paralleler Blattfedern im wesentlichen dieselbe ist, wie die Radialrichtung in Bezug zum Aufzeichnungsmedium; dadurch gekennzeichnet, daß das Gerät desweiteren aufweist:
Verstärkungsplatten (43), die an den ersten, zweiten und dritten Paaren paralleler Blattfedern zur Verstärkung der Blattfedern befestigt sind.

10. Ein optisches Gerät gemäß Anspruch 9, desweiteren aufweisend ein Gelenkbauteil (4E, 4F), um das Objektivlinsenhaltebauteil beweglich entlang der optischen Achse der Objektivlinse zu machen, wobei das Gelenkbauteil in einem Abschnitt des Abstützbauteils ausgebildet ist.

11. Ein optisches Gerät gemäß Anspruch 9, wobei die ersten, zweiten und dritten Paare an Blattfedern (4B, 4B', 4D, 4D') integral als eine Platte ausgebildet sind.

12. Ein optisches Gerät gemäß Anspruch 9, wobei die Breite des ersten Paars paralleler Blattfedern (4B, 4B') in einer Ebene parallel zur optischen Achse der Objektivlinse (1A) in einem Bereich zwischen eins und eineinhalb mal der Breite der zweiten oder dritten Paare an parallelen Blattfedern (4D, 4D') in jener Ebene ist.

13. Ein optisches Gerät gemäß Anspruch 12, wobei die Dicke des ersten Paars paralleler Blattfedern (4B, 4B') in einer Ebene senkrecht zur optischen Achse der Objektivlinse (1A) größer als die Dicke der zweiten und dritten Paare an parallelen Blattfedern (4D, 4D') in jener Ebene ist.

14. Ein optisches Gerät gemäß einem der Ansprüche 9 bis 13, desweiteren aufweisend eine Erfassungsvorrichtung zur Erfassung der Position des Objektivlinsenhaltebauteils (1) in einer Richtung entlang der optischen Achse der Objektivlinse (1A).

15. Ein optisches Gerät gemäß einem der Ansprüche 9 bis 14, desweiteren aufweisend einen Rückprallspiegel (1B) zur Lenkung eines Lichtstrahls von einer Lichtquelle zu einer Objektivlinse (1A), ein Rückprallspiegelhaltebauteil zum Halten des Rückprallspiegels und ein Rückprallspiegelhaltebauteilabstützbauteil zum beweglichen Abstützen des Rückprallspiegelhaltebauteils in einer Radialrichtung in Bezug zum Aufzeichnungsmedium, wobei das Rückprallspiegelhaltebauteilabstützbauteil eine erste Blattfeder aufweist, von der ein Ende an dem Gerät befestigt ist, und die sich in einer Richtung senkrecht zur Bewegungsrichtung des Rückprallspiegellinsenhaltebauteils und weg von dem Rückprallspiegelhaltebauteil erstreckt, und eine zweite Blattfeder, von der ein Ende an einem Seitenabschnitt des Rückprallspiegelhaltebauteils befestigt ist, die sich in der Richtung senkrecht zur Bewegungsrichtung erstreckt und wobei das andere Ende davon mit der ersten Blattfeder verbunden ist.

16. Ein optisches Gerät gemäß Anspruch 15, desweiteren aufweisend eine Erfassungsvorrichtung (914) zur Erfassung einer Relativposition zwischen dem Objektivlinsenhaltebauteil (1) und dem Rückprallspiegelhaltebauteil.

## Revendications

1. Dispositif d'entraînement d'une lentille d'objectif destiné à être utilisé dans un appareil optique pour effectuer au moins l'une des fonctions d'enregistrement et de reproduction d'informations en éclairant un support d'enregistrement en forme de disque avec un point lumineux, ledit dispositif d'entraînement de lentille d'objectif comportant :
une lentille d'objectif (lA) ayant un axe optique ;
un élément (1) de monture de lentille d'objectif destiné à maintenir ladite lentille d'objectif ;
un élément de support destiné à supporter de façon mobile ledit élément de monture de lentille d'objectif dans une direction radiale par rapport au support d'enregistrement, ledit élément de support comportant (i) une première paire de lames à ressort parallèles (4B, 4B'), dont chacune est fixée par une extrémité audit appareil et s'étend dans une direction perpendiculaire à une direction de mouvement dudit élément de monture de lentille d'objectif et à l'écart dudit élément de monture de lentille d'objectif, et (ii) des deuxième et troisième paires de lames à ressort parallèles (4D, 4D'), une extrémité de chaque paire étant fixée à une partie latérale dudit élément de monture de lentille d'objectif, et s'étendant dans la direction perpendiculaire à la direction du mouvement et l'autre extrémité de chaque paire étant reliée à ladite première paire de lames à ressort parallèles, ladite première paire de lames à ressort parallèles (4B, 4B') étant disposée entre lesdites deuxième et troisième paires de lames à ressort parallèles, et la direction de déformation principale de chacune des première, deuxième et troisième paires de lames à ressort parallèles étant sensiblement identique à la direction radiale par rapport au support d'enregistrement ; caractérisé en ce que :
ledit appareil comporte en outre :
des plaques de renfort (43) montées sur lesdites première, deuxième et troisième paires de lames à ressort parallèles pour renforcer lesdites lames à ressort.

2. Appareil d'entraînement d'une lentille d'objectif selon la revendication 1, comportant en outre un élément d'articulation (4E, 4F) destiné à rendre ledit élément de monture de lentille d'objectif mobile le long de l'axe optique de ladite lentille d'objectif, ledit élément d'articulation étant formé dans une partie dudit élément de support.

3. Appareil d'entraînement d'une lentille d'objectif selon la revendication 1, dans lequel lesdites première, deuxième et troisième paires de lames à ressort (4B, 4B', 4D, 4D') sont formées d'une seule pièce en forme de plaque.

4. Appareil d'entraînement de lentille d'objectif selon les revendications 1, 2 ou 3, dans lequel la largeur de ladite première paire de lames à ressort parallèles (4B, 4B') dans un plan parallèle à l'axe optique de ladite lentille d'objectif (lA) est dans une plage comprise entre une fois et une fois et demie la largeur desdites deuxième et troisième paires de lames à ressort parallèles dans ce plan.

5. Appareil d'entraînement de lentille d'objectif selon la revendication 4, dans lequel l'épaisseur de ladite première paire de lames à ressort parallèles (4B, 4B') dans un plan perpendiculaire à l'axe optique de ladite lentille d'objectif (lA) est plus grande que l'épaisseur desdites deuxième et troisième paires de lames à ressort parallèles (4D, 4D') dans ce plan.

6. Appareil d'entraînement d'une lentille d'objectif selon l'une quelconque des revendications précédentes, comportant en outre des moyens de détection destinés à détecter la position dudit élément (1) de monture de lentille d'objectif dans une direction le long de l'axe optique de ladite lentille (lA) d'objectif.

7. Appareil d'entraînement d'une lentille d'objectif selon l'une quelconque des revendications précédentes, comportant en outre un miroir (1B) de renvoi destiné à diriger un faisceau lumineux d'une source de lumière vers ladite lentille d'objectif (1A), un élément de monture du miroir de renvoi destiné au montage dudit miroir de renvoi et un élément de support de l'élément de monture du miroir de renvoi destiné à supporter de façon mobile ledit élément de monture du miroir de renvoi dans une direction radiale par rapport au support d'enregistrement, ledit élément de support de l'élément de monture du miroir de renvoi comportant une première lame à ressort, dont une extrémité est fixée audit appareil et qui s'étend dans une direction perpendiculaire à une direction de mouvement dudit élément de monture de lentille du miroir de renvoi et à l'écart dudit élément de monture du miroir de renvoi, et une seconde lame à ressort dont une extrémité est fixée à une partie latérale dudit élément de monture de miroir de renvoi, qui s'étend dans la direction perpendiculaire à la direction de mouvement et dont l'autre extrémité est reliée à ladite première lame à ressort.

8. Appareil d'entraînement d'une lentille d'objectif selon la revendication 7, comportant en outre des moyens de détection (914) destinés à détecter une position relative entre ledit élément (1) de monture de lentille d'objectif et ledit élément de monture du miroir de renvoi.

9. Appareil optique destiné à effectuer au moins l'une des fonctions d'enregistrement ou de reproduction d'informations en éclairant un support d'enregistrement en forme de disque par un point lumineux, ledit appareil comportant :
une lentille d'objectif (lA) ayant un axe optique ;
un élément (1) de monture de lentille d'objectif destiné à maintenir ladite lentille d'objectif ;
un élément de support destiné à supporter de façon mobile ledit élément de monture de lentille d'objectif dans une direction radiale par rapport au support d'enregistrement, ledit élément de support comportant (i) une première paire de lames à ressort parallèles (4B, 4B') dont chacune est fixée par une extrémité audit appareil et qui s'étend dans une direction perpendiculaire à une direction de mouvement dudit élément (1) de monture de lentille d'objectif à l'écart dudit élément de monture de lentille d'objectif, et (ii) des deuxième et troisième paires de lames à ressort parallèles (4D, 4D'), une extrémité de chaque paire étant fixée à une partie latérale dudit élément de monture de lentille d'objectif, et s'étendant dans la direction perpendiculaire à la direction du mouvement et l'autre extrémité de chaque paire étant reliée à ladite première paire de lames à ressort parallèles, ladite première paire de lames à ressort parallèles étant disposée entre lesdites deuxième et troisième paires de lame à ressort parallèles (4B, 4B'), et la direction de déformation principale de chacune des première, deuxième et troisième paires de lames à ressort parallèles étant sensiblement identique à la direction radiale par rapport au support d'enregistrement ; caractérisé en ce que ledit appareil comporte en outre :
des plaques de renfort (43) montées sur lesdites première, deuxième et troisième paires de lames à ressort parallèles pour renforcer lesdites lames à ressort.

10. Appareil optique selon la revendication 9, comportant en outre un élément d'articulation (4E, 4F) destiné à rendre ledit élément de monture de lentille d'objectif mobile le long de l'axe optique de ladite lentille d'objectif, ladite articulation étant formée dans une partie dudit élément de support.

11. Appareil optique selon la revendication 9, dans lequel lesdites première, deuxième et troisième paires de lames à ressort (4B, 4B', 4D, 4D') sont formées d'une seule pièce sous la forme d'une plaque découpée.

12. Appareil optique selon la revendication 9, dans lequel la largeur de ladite première paire de lames à ressort parallèles (4B, 4B') dans un plan parallèle à l'axe optique de ladite lentille d'objectif (1A) est dans une plage comprise entre une fois et une fois et demie la largeur desdites deuxième ou troisième paires de lames à ressort parallèles (4D, 4D') dans ce plan.

13. Appareil optique selon la revendication 12, dans lequel l'épaisseur de ladite première paire de lames à ressort parallèles (4B, 4B') dans un plan perpendiculaire à l'axe optique de ladite lentille d'objectif (1A) est plus grande que l'épaisseur desdites deuxième ou troisième paires de lames à ressort parallèles (4D, 4D') dans ce plan.

14. Appareil optique selon l'une quelconque des revendications 9 à 13, comportant en outre des moyens de détection destinés à détecter la position dudit élément (1) de monture de lentille d'objectif dans une direction le long de l'axe optique de ladite lentille d'objectif (1A).

15. Appareil optique selon l'une quelconque des revendications 9 à 14, comportant en outre un miroir de renvoi (1B) destiné à diriger un faisceau lumineux d'une source de lumière vers ladite lentille d'objectif (1A), un élément de monture de miroir de renvoi destiné à maintenir ledit miroir de renvoi et un élément de support de l'élément de monture du miroir de renvoi destiné à supporter de façon mobile ledit élément de monture du miroir de renvoi dans une direction radiale par rapport au support d'enregistrement, ledit élément de support de l'élément de monture du miroir de renvoi comportant une première lame à ressort, dont une extrémité est fixée audit appareil et qui s'étend dans une direction perpendiculaire à une direction de mouvement dudit élément de monture de lentille du miroir de renvoi et à l'écart dudit élément de monture du miroir de renvoi, et une seconde lame à ressort, dont une extrémité est fixée à une partie latérale dudit élément de monture du miroir de renvoi, qui s'étend dans la direction perpendiculaire à la direction de mouvement et dont l'autre extrémité est reliée à ladite première lame à ressort.

16. Appareil optique selon la revendication 15, comportant en outre des moyens de détection (914) destinés à détecter une position relative entre ledit élément (1) de monture de lentille d'objectif et ledit élément de monture du miroir de renvoi.
